Europäisches Patentamt

European Patent Office

Office européen des brevets

(11) Veröffentlichungsnummer: **0 311 571**
**A1**

# (12) EUROPÄISCHE PATENTANMELDUNG

(21) Anmeldenummer: 88810685.3

(22) Anmeldetag: 05.10.88

(51) Int. Cl.⁴: **B 65 D 65/38**

(30) Priorität: 08.10.87 DE 3734061

(43) Veröffentlichungstag der Anmeldung:
12.04.89 Patentblatt 89/15

(84) Benannte Vertragsstaaten: ES

(71) Anmelder: **SANDOZ AG**
**Lichtstrasse 35**
**CH-4002 Basel (CH)**

(72) Erfinder: **Daniel, Peter Gottfried**
**Hirschstrasse 43**
**D-7022 Leinfelden-Echterdingen 2 (DE)**

**Hetzel, Günther**
**Winzler Strasse 50**
**D-6780 Pirmasens (DE)**

**Kopp, Gerhard**
**Burgstrasse 70**
**D-7410 Reutlingen (DE)**

(54) **Packung und Verpackung.**

(57) Vollverwertbares Packmittel aus thermoplastischem polyurethanhaltigem Kunststoff, das alleine oder mit allfälligen kompatiblen Packhilfsmitteln und/oder mit kompatiblem Packgut zu gebrauchsfertigen Erzeugnissen verarbeitbar ist, die Packungen, das Verarbeitungsverfahren und die Verarbeitungserzeugnisse.

EP 0 311 571 A1

**Beschreibung**

**Packung und Verpackung**

Bei der Handhabung und für den Transport von Packgut werden Verpackungen verwendet, die einen genügenden Schutz des Packgutes beim Transport und beim Umladen gewährleisten können; es werden auch immer häufiger Packungen gewünscht und verwendet, die für das Einfüllen des Packgutes, insbesondere von Rieselgut, in die jeweiligen Behälter und Verarbeitungsgefässe und insbesondere auch für dessen Dosierung geeignet sind. Das Verpackungsmaterial besteht meistens aus einer oder auch mehreren Hüllen, z.B. Papier, Säcken, Beuteln, Kartons, Dosen oder auch Fässern, welche nach deren Entleerung ein platzraubendes Material darstellen können, das nach sorgfältiger Entleerung und gegebenenfalls Reinigung auf aufwendige Weise vernichtet oder zur Entsorgung weitertransportiert bzw. zurücktransportiert werden muss.

Es wurde nun gefunden, dass die genannten Probleme mindestens teilweise vermieden werden können, wenn man als Packmittel für das Packgut eine Hülle aus thermoplastischem polyurethanhaltigem Packstoff verwendet, welche zur Weiterverarbeitung voll verwertbar ist.

Gegenstand der Erfindung ist also ein Packmittel aus thermoplastischem Packstoff, das dadurch gekennzeichnet ist, dass der Kunststoff, aus welchem der Packstoff gefertigt ist, ein solcher polyurethanhaltiger Werkstoff ist, dass das Packmittel zur Herstellung von polyurethanhaltigen gebrauchsfertigen Erzeugnissen verwertbar ist.

Die hier verwendeten verpackungstechnischen Begriffe entsprechen der Terminologie gemäss DIN 55405 und sind insbesondere wie folgt zu verstehen:

| | |
|---|---|
| Packmittel: | geformte Hülle, die alleine ausreicht, um eine bestimmte Menge Packgut zu beinhalten. |
| Verpackung: | Packmittel alleine (wenn ausreichend) oder zusammen mit den erforderlichen Packhilfsmitteln. |
| Packgut: | der gesamte Inhalt der im Packmittel verpackt ist. |
| Packhilfsmittel: | Verpackungsteile, die ausser dem Packmittel erforderlich sind, um die Verpackung zu vervollständigen oder zu ergänzen (für das Verschliessen, Verpacken, Versandfertigmachen usw. ...). |
| Packstoff: | der Stoff, woraus das Packmittel und die Packhilfsmittel gefertigt sind. |
| Packung: | die gesamte Einheit bestehend aus der Verpackung zusammen mit ihrem Inhalt. |

Als polyurethanhaltiger Werkstoff (in Bezug auf den thermoplastischen Packstoff) wird hier ein polyurethanhaltiger Stoff verstanden, der soweit verarbeitet ist, dass ein Packmittel daraus gefertigt werden kann, aber der in Form von Packmittel als Ausgangsstoff für die weitere Verarbeitung geeignet ist. Als Verarbeitung wird hier im allgemeinen jeder Vorgang verstanden, mit welchem das Packmittel, gegebenenfalls in Anwesenheit weiterer Zusätze, zweckmässig in geeigneter Form, vornehmlich als mindestens teilweise erweichte, geschmolzene oder gelöste verarbeitbare Masse, zu gebrauchsfertigen Erzeugnissen verarbeitet wird. Gebrauchsfertige Erzeugnisse sind hier sowohl polyurethanhaltige Präparate (z.B. Klebstoffpräparate, Präparate für die Herstellung von Anstrichfarben, Tinten und Lacken und für die Herstellung von Beschichtungen, Filmen, Folien und sonstigen polyurethanhaltigen Erzeugnissen), als auch die für den Endverbrauch direkt bestimmten Verarbeitungs- bzw. Weiterverarbeitungserzeugnisse, z.B. die hergestellten

2

EP 0 311 571 A1

Folien, Filme, Beschichtungen, Laminate, Filamente, Formkörper etc.

Als Packstoff für das Packmittel kommen thermoplastische Stoffe in Betracht, die im wesentlichen aus beliebigen thermoplastischen polyurethanhaltigen Werkstoffen bestehen, vorzugsweise solchen, die für die Herstellung von Folien geeignet sind. Je nach Beschaffenheit und/oder Weiterverwendungszweck des Packmittels im Hinblick auf das gewünschte gebrauchsfertige Erzeugnis können die Packstoffe neben den Polyurethanen, und gegebenenfalls Verschnittpolymeren, geeignete Zusätze (Hilfs-und/oder Nebenstoffe) enthalten, vornehmlich UV-Absorber, Antistatika, Weichmacher, Antioxydantien, Mattierungsmittel, Farbstoffe, Antiblockmittel, Gleitmittel oder (z.B. falls wässrige Polyurethandispersionen für die Herstellung des Packmittels verwendet wurden) gegebenenfalls grenzflächenaktive Zusätze und/oder auch Verdickungsmittel. Je nach Art der Zusätze und des polyurethanhaltigen Werkstoffes, Beschaffenheit, Grösse und Gewicht der Packung und Verwendungszweck kann die Konzentration der Zusätze im polyurethanhaltigen Packstoff unterschiedlich sein; sie beträgt vorteilhaft bis zu 5 Gew.%, vorzugsweise 0,001 bis 2 Gew.% des Packstoffes. Für die Herstellung der Folien für das Packmittel werden vorteilhaft lineare oder nahezu lineare Polyurethane verwendet, die nur gering oder nicht quervernetzt sind. Gewünschtenfalls können die Polyurethane mit anderen an sich üblichen Polymeren, vornehmlich Polyvinylchloriden oder Polyacrylaten verschnitten sein.

Der Polyurethangehalt im Packstoff beträgt vorteilhaft mindestens 50 Gew.%, vorzugsweise mindestens 80 Gew.%. Besonders vorteilhaft wird Polyurethan als alleiniger Kunststoff im Packstoff verwendet. Es kommen dafür beliebige übliche im wesentlichen lineare Polyurethane in Betracht, vornehmlich solche, die aus der Umsetzung von Diisocyanaten mit isocyanatreaktiven Verbindungen, vorwiegend Diolen und gegebenenfalls Diaminoverbindungen stammen und vorteilhaft mindestens z.T. hydroxy- und/oder aminoterminiert, vorzugsweise hydroxyterminiert, sind.

Besonders bevorzugt sind die Polyurethane solche die zur Herstellung von Klebstoffen auf Polyurethanbasis, insbesondere Einkomponentenklebstoffen auf Polyurethanbasis, geeignet sind.

Als Diisocyanate kommen im allgemeinen beliebige für die Polyurethanherstellung übliche Diisocyanate in Betracht, vorzugsweise solche mit 2-15 Kohlenstoffatomen im Kohlenwasserstoffgrundgerüst, worunter folgende erwähnt werden können: Polymethylendiisocyanate mit 2-6 Methylengruppen, Trimethylhexylen-1,6-diisocyanat (insbesondere 2,2,4-Trimethylhexylen-1,6-diisocyanat oder 2,4,4-Trimethylhexylen-1,6-diisocyanat), 5-Methyl-1,9-diisocyanatononan, 2-Methyl-1,5-diisocyanatopentan, 2-Aethyl-1,4-diisocyanatobutan und mono- oder dicyclische Diisocyanate, vornehmlich 2,4- oder 2,6-Toluylendiisocyanat, m-Phenylendiisocyanat, Xylylendiisocyanat, 4,4'-Diphenylmethandiisocyanat, 3,3'-Dimethyl-4,4'-diphenylmethandiisocyanat, Dicyclohexylmethan-4,4'-, -4,2'- oder -2,2'-diisocyanat, wobei jeder Cyclohexylrest gegebenenfalls noch eine Methylgruppe tragen kann, 1,3-Cyclohexylendiisocyanat, methylsubstituiertes 1,3-Cyclohexylendiisocyanat und Isophorondiisocyanat.

Die Diole für die Polyurethanherstellung sind vorzugsweise mindestens z.T. Makrodiole, vornehmlich solche mit einem durchschnittlichen Molekulargewicht (Gewichtsdurchschnitt) im Bereich von 400-6'000, vorzugsweise 500-5'000, wobei vorteilhaft mindestens ein Teil der Macrodiole ein durchschnittliches Molekulargewicht im Bereich von 800-4'000 aufweist. Die Makrodiole können auf Polyesterbasis, auf Polyätherbasis oder auch auf kombinierter Basis sein.

Es können folgende bevorzugte Kategorien von Polyolen genannt werden:

Polyalkylenglykole mit 2-6 Kohlenstoffatomen im Alkylenrest, worunter Polypropylenglykole und Polybutylenglykole oder gemischte Polypropylen-und -butylenglykole bevorzugt sind. Die Polybutylenglykole sind vornehmlich solche, die sauerstoffgebundene Butylen-1,2-, Butylen-2,3- oder Butylen-1,4-gruppen enthalten (letztere sind auch unter der Bezeichnung Polytetrahydrofurane bekannt). Polyäthylenglykole, Polypropylenglykole und Polybutylenglykole bzw. entsprechende gemischte Polyätherdiole sind vornehmlich Anlagerungsprodukte der entsprechenden Oxyde (Aethylenoxyd, Propylenoxyd, Butylenoxyd und/oder Tetrahydrofuran) an Wasser oder Ausgangsdiole, welche insbesondere 2-6 Kohlenstoffatome enthalten, z.B. Aethylenglykol, Propylenglykol, Butylenglykol oder Hexamethylendiol. Bevorzugt sind Polypropylenglykole.

Polyesterdiole, vornehmlich erhältlich durch Umsetzung von Alkandiolen mit 2-6 Kohlenstoffatomen, vorzugsweise Aethylenglykol, Propandiol-1,3, Butandiol-1,4, Neopentylglykol oder Hexandiol-1,6, mit entsprechenden aliphatischen oder aromatischen Dicarbonsäuren, vorteilhaft mit insgesamt 4-8 Kohlenstoffatomen, vorzugsweise Maleinsäure, Bernsteinsäure, Sebacinsäure, Adipinsäure oder Phthalsäure (worunter die Adipinsäure bevorzugt ist) - bzw. mit entsprechenden funktionellen Derivaten davon z.B. dem Anhydrid - oder durch Umsetzung von Caprolacton mit einem entsprechenden Ausgangsdiol oder Wasser, vorzugsweise $H_2O$ oder einem Alkandiol wie oben erwähnt, zu hydroxyterminierten Polycaprolactonen.

Gemischte Polyesterpolyätherdiole vorzugsweise erhältlich durch Umsetzung der genannten Säuren (bzw. der funktionellen Derivate davon) oder Caprolacton mit entsprechenden Oligoalkylenglykolen, worin Alkylen 2-6 Kohlenstoffatome enthält, genannt werden, insbesondere Diäthylenglykol.

Neben den Makrodiolen können auch andere difunktionelle Verbindungen eingesetzt werden - beispielsweise als Kettenverlängerer - vornehmlich einfache Alkandiole, wie oben erwähnt, oder Di- oder Triäthylenglykol, Hydrazin oder aliphatische Diamine mit 2-9 Kohlenstoffatomen, vorzugsweise Propylendiamin und Isophorondiamin oder noch $\alpha,\alpha$-Dimethylolalkancarbonsäuren, vorteilhaft Dimethylolessigsäure, die am $\alpha$-Kohlenstoffatom weiter unsubstituiert ist oder einen $C_{1-4}$-Alkylrest trägt (vorzugsweise Dimethylolpropionsäure und Dimethylolessigsäure), oder auch in kleinen Mengen, z.B. 0,1 bis 5 Mol% der vorhandenen Diole, höherfunktionelle Verbindungen z.B. Trimethylolpropan, Glycerin oder Sorbit.

Das Aequivalenzverhältnis der Diisocyanate zu den isocyanatreaktiven Verbindungen wird zweckmässig so gewählt, dass ein genügend hochmolekulares, stabiles, thermoplastisches Polyurethan gebildet wird, aus welchem eine für ein Packmittel geeignete Folie erzeugt werden kann. Vorteilhaft werden pro Val isocyanatreaktiver Verbindung 0,85-1,10, vorzugsweise 0,90-1,05, insbesondere 0,99-1,01 Val Diisocyanat eingesetzt.

Die Polyaddition der Diisocyanate mit den isocyanatreaktiven Verbindungen kann auf an sich bekannte Weise stattfinden, insbesondere in An-oder Abwesenheit von Lösungsmitteln (z.B. in Gegenwart von Dialkylketonen, vorzugsweise Methyläthylketon, Aceton oder Cyclohexanon, von Dimethylolformamid, von N-Methylpyrrolidon, von Tetrahydrofuran oder von aliphatischen Carbonsäureestern, z.B. Essigsäureäthylester oder Essigsäureäthoxyäthylester, die gegebenenfalls mit aromatischen Lösungsmitteln, vorzugsweise Toluol oder Xylol verschnitten sein können) und vorteilhaft im Temperaturbereich von 40°C bis zur Rückflusstemperatur der Lösungsmittel, vorzugsweise 40 bis 90°C, wenn in Gegenwart von Lösungsmitteln polyaddiert wird, oder bis zu 250°C wenn in Abwesenheit von Lösungsmitteln, insbesondere in der Schmelze polyaddiert wird, und gewünschtenfalls in Gegenwart von geeigneten Katalysatoren, z.B. Zynn-II-octoat oder Dibutylzinndilaurat. Bevorzugt wird in Abwesenheit von jeglichen Lösungsmitteln und Katalysatoren verfahren, wobei die Temperatur vorteilhaft im Bereich von 50-250°C, insbesondere 70-200°C gehalten wird. Sind Carboxygruppen im Polyurethan vorhanden, so werden diese vorteilhaft vor einer allfälligen Kettenverlängerung mindestens teilweise in eine Salzform übergeführt. Zur Salzbildung eignen sich übliche, insbesondere einwertige Kationen, vornehmlich Alkalimetall- oder Ammoniumkationen [z.B. Lithium, Natrium, Kalium oder Tri-($C_{1-4}$-alkyl)-ammonium]. Eine allfällige Kettenverlängerung von carboxygruppenhaltigen Polyurethanen mit Diaminoverbindungen kann mit Vorteil auch in wässrigem Medium durchgeführt werden.

Die thermoplastischen polyurethanhaltigen Packstoffe, können auf an sich bekannte Weise zu Packmitteln verarbeitet werden, zweckmässig als verarbeitbare mindestens teilweise erweichte Masse, in der Schmelze (wobei als Schmelze hier jeder zähflüssige bis flüssige Zustand innerhalb und/oder oberhalb des Schmelzbereiches gemeint ist), in organischer Lösung oder in wässriger Dispersion. Als organische Lösungsmittel für die Kunststofflösungen können im allgemeinen übliche, leicht verdampfbare Lösungsmittel verwendet werden, z.B. die obengenannten. Wässrige Dispersionen kommen vornehmlich für in Wasser selbst-dispergierbare Polymere in Betracht, z.B. für sulfo- oder carboxygruppenhaltige Polymere (insbesondere Polyurethane), worin die Sulfo- bzw. Carboxygruppen mindestens teilweise in Salzform vorliegen. Auch in Wasser selbst-nicht-dispergierbare thermoplastische Kunststoffe können gewünschtenfalls in Wasser auf geeignete Weise, vorzugsweise unter Zuhilfenahme von üblichen grenzflächenaktiven Verbindungen, insbesondere von Dispergiermitteln, auf an sich übliche Weise dispergiert werden, wenn für die Weiterverwendung des Packstoffes grenzflächenaktive Zusätze gewünscht sind oder toleriert werden können. Geeignete grenzflächenaktive Verbindungen sind insbesondere Emulgatoren mit Oel-in-Wasser-Emulgatorcharakter, vorzugsweise hydrophile Tenside, gegebenenfalls auch solche mit Schutzkolloidcharakter.

Die genannten Tenside sind z.B. in Mengen von 0,01 bis 5, vorzugsweise 0,1 bis 2 Gew.% bezogen auf die Polymeren vorhanden.

Für die Herstellung der Hülle werden die thermoplastischen polyurethanhaltigen Packstoffe, zweckmässig in verarbeitbarer vornehmlich fliessfähiger Form, z.B. als mindestens teilweise erweichte, geschmolzene oder gelöste Masse oder als Dispersion zur gewünschten Hüllenform - günstigerweise als Folie bzw. Schlauch - verarbeitet. Dies kann z.B. durch Giessen, Streichen oder Kalandrieren auf eine geeignete Unterlage (z.B. Bleche oder Transferpapier), von welcher die Folie leicht getrennt werden kann, oder Extrudieren (z.B. durch Rund- oder Breitschlitzdüse, insbesondere auch durch das Blasformen) zu Folien oder Schläuchen erfolgen, welche dann zu entsprechenden Behältern (Säcken, Beuteln) geschnitten und verschlossen (verschweisst oder geklebt) werden können. Wenn organische Lösungen der Kunststoffe verwendet werden, kann das verdampfte Lösungsmittel aufgefangen und zur Wiederverwendung destilliert und gegebenenfalls gereinigt werden. Geeignete Verdampfungstemperaturen sind dabei im Bereich von 40-90°C, vorzugsweise 50-80°C. Werden wässrige Kunststoffdispersionen verwendet, dann wird vorteilhaft bei Temperaturen im Bereich von 70 bis 98°C getrocknet. Die Konzentrationen der genannten Lösungen und Dispersionen werden zweckmässig dem entspre chenden Herstellungssystem, insbesondere den dazu geeigneten Viskositäten angepasst. Geeignete Konzentrationen liegen beispielsweise im Bereich von 10-75 Gew.%, vorzugsweise 15-50 Gew.%, Feststoffgehalt, und die Viskosität liegt vorteilhaft unterhalb 150'000 mPas bei 20°C, vorzugsweise im Bereich von 3000 bis 50'000 mPas bei 20°C.

Zur Extrusion werden die vornehmlich mindestens teilweise erweichten oder geschmolzenen Thermoplaste bei Temperaturen im Schmelzbereich (vorteilhaft $\geq$ 50°C, vorzugsweise $\geq$ 70°C, bis zum Tropfpunkt), vorteilhaft bei einem L/D-Verhältnis der Extruderschnecke von mindestens 10 D, extrudiert: insbesondere zu Schläuchen extrudiert (vorzugsweise blasgeformt) und z.B. zu Säcken oder Beuteln direkt geschnitten und geschweisst oder geklebt, oder zu offenen Folien aufgeschnitten bzw. durch Breitschlitzdüsen direkt zu Folien extrudiert und dann zu einer beliebigen geeigneten Form verarbeitet. Für das Kalandrieren können die Thermoplaste auch im Schmelzbereich wie für das Extrudieren eingesetzt werden. Für das Giessen kommen im wesentlichen Lösungen und Dispersionen sowie auch die Schmelze oberhalb des Tropfpunktes in Betracht. Die Bearbeitung im Schmelzbereich, namentlich Kalandrieren und Extrudieren, vor allem letzteres, ist bevorzugt. Nach dem Kalandrieren oder Extrudieren können die Schläuche bzw. Folien gewünschtenfalls mono- oder auch biaxial gereckt werden. Wässrige Dispersionen können auch für das Streichen und das Kalandrieren eingesetzt werden, wenn sie genügend dickflüssig sind; erforderlichenfalls können sie mit

4

geeigneten üblichen Polyurethanverdickungsmitteln versetzt sein, z.B. mit Hydroxyäthylcellulose oder mit (Meth)acrylsäure/(Meth)acrylsäureester-copolymerisaten -letztere unter alkalischen pH-Bedingungen -; gelegentlich kann auch Ammoniak als Verdickungsmittel eingesetzt werden.

Aus den verarbeitbaren Massen (mindestens teilweise erweichte, geschmolzene oder gelöste Masse, oder Dispersion), wie oben beschrieben, kann auch, gegebenenfalls unter Beimischung weiterer Zusätze, Packgut gefertigt werden - wenn es solche thermoplastischen Werkstoffe enthalten soll -, beispielsweise durch Zerkleinern der getrockneten Produkte, durch Sprühtrocknen oder durch geeignete Formgebung.

Gewünschtenfalls können den genannten Schmelzen, Lösungen oder Dispersionen weitere Zusätze, z.B. weitere kompatible Kunststoffe, Nebenstoffe und/oder Hilfsstoffe, wie oben erwähnt, beigemischt werden.

Die Stärke der für die Hülle verwendeten Folien wird günstigerweise der Grösse und dem Gewicht der Packung entsprechend gewählt und liegt vorteilhaft im Bereich von 0,01-2,5mm, vorzugsweise im Bereich von 0,02-1,8mm.

Nach einer besonderen Ausgestaltung der Erfindung wird für allfällige Packhilfsmittel ebenfalls polyurethanhaltiger thermoplastischer Packstoff verwendet, der vorzugsweise mit dem Packmittel kompatibel ist und der auch, insbesondere zusammen mit dem Packmittel, zu verarbeiten ist. So kann erfindungsgemäss die gesamte Verpackung (Packmittel und gegebenenfalls vorhandene Packhilfsmittel) voll verwertet werden. Wenn das Packgut mit dem Packmittel kompatibel ist, kann auch das Packgut zusammen mit dem Packmittel und gegebenenfalls dem Packhilfsmittel verarbeitet werden.

Als Packgut kommen beliebige Stoffe in Betracht, wie sie üblicherweise in Kunststoff-Folie verpackt werden oder die in Kunststoff-Folie verpackt werden können, z.B. landwirtschaftlicher Güter, insbesondere Viehfutter und Düngemittel, Bau-, Konfektionier- und sonstiges Massen-oder Stückgut, vornehmlich Textilmaterial, Textilien, Papier, Sand, Zement und Gips und Serien von sonstigen Kleinpackungen en-gros, oder bevorzugt Werkstoffe, die in Lösung oder auch in der Schmelze separat oder vorzugsweise zusammen mit dem Packstoff verarbeitet werden können und können insbesondere thermoplastische oder auch nicht thermoplastische Kunststoffe sein. Bevorzugt sind für das Packgut Kunststoffe, die in gängigen Lösungsmitteln (z.B. den weiter unten genannten) leicht löslich sind oder unter üblichen Verarbeitungstemperaturen gegebenenfalls zusammen mit dem Packstoff schmelzfähig sind, beispielsweise Celluloseacetate, Polyamide (vornehmlich Polyamid 6, Polyamid 66, Polyamid 11 und Qiana), Polyester (z.B. Polyäthylenterephthalat oder ähnliche faserbil dende Polyester), Polyacrylnitril, Poly(meth)acrylate (z.B. solche, worin die esterbildenden Alkylreste 1-4 Kohlenstoffatome enthalten und z.T. auch längerkettige Alkylreste sein können, beispielsweise mit 5-22, insbesondere 12-18 Kohlenstoffatomen im Alkylrest), Epoxyharze, Polyvinylchlorid, Polyvinylalkohol und/oder -acetat, Polyurethane, Polyene (z.B. Additionspolymere aus Styrol, Aethylen, Propylen und/oder Butadien), Polyäther sowie gemischte Polymere und Copolymere, die Teile der genannten Kunststoffe enthalten, oder noch natürliche und synthetische Kautschuke (Kautschuk oder Polychloropren) und Casein. Als Nebenstoffe und Hilfsstoffe, die als Packgut in Frage kommen, werden hier im wesentlichen feste Substanzen verstanden, die beispielsweise bei der Verarbeitung von Kunststoffen als Beimischung verwendet werden können, vornehmlich Farbstoffe (Pigmente, Lösungsmittelfarbstoffe), Füllstoffe, Antiblockmittel, Gleitmittel, Fliessverbesserer, Rieselhilfen und Mattierungsmittel (Tone, z.B. Kaolin oder Montmorillonit; Kreide; Schwerspat; Quarzsand, Kieselsäure; Titandioxid; Wachse, z.B. synthetische Kohlenwasserstoffwachse und Esterwachse), UV-Absorber, Antioxydantien, Antistatika und Weichmacher (Plasticizer). Gewünschtenfalls können die genannten Hilfs- und Nebenstoffe in hoher Konzentration ("Master-batch") für Dosierzwecke in entsprechende Kunststoffe einverleibt sein und in dieser Form als Packgut auch verwendet werden. Die Konzentration von Hilfs- und Nebenstoff im Master-batch liegt im allgemeinen im üblichen Bereich; je nach Art des Hilfs- bzw. Nebenstoffes und des Kunststoffes und gewünschtem Verwendungserzeugnis kann sie verschieden sein und liegt meistens im Bereich von 10-90 Gew.% des Master-batch.

Besonders vorteilhaft werden als Packgut übliche Klebrohstoffe eingesetzt, insbesondere Polychloropren, PVC und PVC-Mischpolymerisate sowie vorzugsweise Polyurethane.

Das Packgut kann im allgemeinen in einer beliebigen üblichen Form vorliegen, z.B. in Form einer Masse pastöser oder wachsartiger Konsistenz oder vorzugsweise in rieselfähiger Form, z.B. als Pulver, Späne, Flokken, Splitter oder Schnitzel oder in einer sonstigen durch Formgebung erzeugten Form (z.B. Kügelchen, Stäbchen, Granulate, Körner, Plättchen, Linsen oder Ringe).

Die vorbereiteten Hüllen können auf übliche Weise mit dem Packgut gefüllt werden und nach dem Füllen verschlossen werden, vornehmlich durch Verschweissen, (gegebenenfalls unter Vacuum und/oder Schrumpfung des gereckten Packmittels z.B. mit Mikrowellen oder Heissluft), Verkleben, Zubinden oder Zunähen. Nach einer Ausführungsform der Packmittelherstellung werden die Säcke bzw. Beutel mit einer (selbst)verschliessbaren Befüllungsöffnung versehen, günstigerweise werden dafür die Folien bzw. Schläuche, vor dem Befüllen, zu verklebten oder verschweissten Ventilsäcken verarbeitet. Nach einer weiteren besonderen Ausführungsform werden die Hüllen (Säcke oder Beutel) mit einer Oeffnungsvorrichtung versehen. Beim Zubinden oder Zunähen ist es von Vorteil ein Bind- oder Nähmaterial zu verwenden, das entweder leicht entfernt werden kann (z.B. unter gleichzeitiger Oeffnung der Hülle) oder aus dem gleichen Material wie die Hülle besteht, so dass es zusammen mit der Hülle verarbeitet wird. Zum Oeffnen der Packungen, insbesondere derjenigen die zugeklebt oder zugeschweisst sind, können vorteilhaft Oeffnungssysteme angebracht werden, die kein Materialverlust mit sich bringen, z.B. Aufreissstreifen oder -ecken (beispielsweise durch Anbringen einer Perforierung oder einer vorgefertigten Sollbruchstelle).

Die erfindungsgemässen Packungen könen, nach einer besonderen Ausführungsform, ohne Verwendung von Fremdmaterial numeriert oder sonst gekennzeichnet werden, beispielsweise durch Anbringen einer eingestanzten oder einperforierten, gegebenenfalls durch Computer ablesbaren Bezeichnung an eine Lasche oder Zunge, welche vorzugsweise einen Teil der Aufreissvorrichtung darstellt (z.B. des Aufreisstreifens).

Die erfindungsgemässen, insbesondere wie beschrieben, hergestellten Packungen können auf einfache Weise gestapelt und transportiert werden, beispielsweise auf Paletten oder in Transport-Containern. Für das Einfüllen des Packgutes in die Verarbeitungsbehälter kann nun auf einfachste Weise jede Packung geöffnet werden, das Packgut in den Behälter gegeben werden und die Verpackungen (Packmittel und gegebenenfalls Packhilfsmittel) können nach deren Entleerung gesammelt, gegebenenfalls gewogen, und zweckbestimmt weiterverarbeitet werden, z.B. in einem separaten Weiterverarbeitungsbehälter oder, nach einer besonderen Ausführungsform, sogar - wenn das Packgut damit kompatibel ist - zusammen mit dem Packgut. Das Packmittel bzw. die Verpackung schmilzt oder löst sich im Gefäss unter den gewählten Verarbeitungsbedingungen. Wenn Packmittel und Packgut zusammen verarbeitet werden, ist eine sehr sorgfältige Entleerung der letzten Teile des Packgutes (z.B. des Rieselgutes) aus der Hülle nicht unbedigt erforderlich, da diese mit der Hülle in das Gefäss kommen. Eine gekennzeichnete Lasche oder Zunge kann, nach dem Abreissen und Registrieren bzw. Kontrollieren der Chargenbezeichnung, ebenfalls in das Verarbeitungsgefäss dazugegeben werden. Gewünschtenfalls kann das Packmittel bzw. die Verpackung vor der Zugabe in das Gefäss in kleinere Teile geteilt werden, z.B. durch Stanzen oder in einer Schneidemühle. Die Hülle kann gewünschtenfalls in einem separaten Gefäss geschmolzen oder gelöst werden, um dann die erhaltene Lösung oder Schmelze mit dem gegebenenfalls gelösten, dispergierten oder geschmolzenen Packgut zu mischen. Besonders vorteilhaft werden die erfindungsgemässen Packungen in Dosiergrössen hergestellt (z.B. zu 5 bis 40kg, insbesondere 10 bis 30kg) und können zur Entleerung z.B. auf einem Dorn aufgeschlitzt werden oder sie können, auch ohne dass sie geöffnet werden, als Ganzes (Packgut zusammen mit Packmittel oder Verpackung) direkt in den Behälter gegeben werden, in welchem Packmittel oder Verpackung gelöst oder geschmolzen werden, wobei das Packgut in der Masse verteilt (gelöst, geschmolzen und/oder dispergiert, je nach ihrer Art und Verfahrensbedingungen) wird, was z.B. für stäubendes Füllgut besonders vorteilhaft ist. Bei üblichen mit Rührer versehenen Mischern von z.B. 0,5 bis 15t liegt die Rührgeschwindigkeit, je nach Form des Rührers und Viskosität des Inhaltes, beispielsweise im Bereich von 400 bis 4000 U/min., vorteilhaft 600 bis 3500 U/min.; nicht geöffnete Dosierpackungen können dabei auch durch die hohen Scherkräfte der Flüssigkeit oder durch den Rührer selbst aufgerissen werden. Entleerte Packmittel werden, zur Lösung oder zum Schmelzen, vorteilhaft nicht alle auf einmal in das Verarbeitungsgefäss gegeben, um Verklumpungen von nicht rasch genug gelösten Hüllen weitmöglichst zu vermeiden.

Mit den erfindungsgemässen Packmitteln bzw. Verpackungen oder auch Packungen und nach dem erfindungsgemässen Verfahren können die Behälter für die Verarbeitung des Packstoffes und des Packgutes auf sehr einfache Weise und mit sehr guter und einfacher Dosierbarkeit des Materials beschickt werden, wobei nahezu kein Verpackungsabfall oder überhaupt kein Verpackungsabfall entsteht bzw. keine platzraubenden leeren Gefässe (wie Fässer, Dosen, Schachteln) gelagert und/oder transportiert werden müssen, und beim Einsatz von Dosierpackungen die nicht geöffnet werden, bedeutend weniger Materialverluste (wie z.B. durch Verschütten oder Stäuben) vorkommen und lästiges Stäuben weitgehend vermieden werden kann.

Die erfindungsgemässen Packmittel bzw. Verpackungen oder insbesondere Packungen können für jede beliebige an sich übliche Verarbeitung von polyurethanhaltigem thermoplastischem Material - insbesondere als mindestens teilweise erweichte, geschmolzene oder gelöste Masse - zu entsprechenden Erzeugnissen eingesetzt werden, beispielsweise zu Kunststoffpräparationen in flüssiger, halbflüssiger oder auch fester Form, die für beliebige übliche Zwecke weiterverwendet werden können (beispielsweise als Klebstoffe, als Beschichtungspräparate, als Bestandteile von Tinten, Lacken oder Anstrichfarben oder zur Herstellung von Filmen, Folien, Filamenten, Formkörpern oder Laminaten, je nach Art der thermoplastischen Bestandteile) sowie auch direkt zu Erzeugnissen in fester Form (z.B. den oben-genannten Filmen, Folien, Filamenten, Formkörpern oder Laminaten). Vorzugsweise werden sie zur Herstellung von Klebstoffpräparaten eingesetzt, wobei das Polyurethan, woraus die Verpackung gefertigt ist, besonders bevorzugt ein Polyurethan für die Herstellung von Klebstoffen auf Polyurethanbasis, insbesondere von Einkomponentenklebstoffen auf Polyurethanbasis ist. Die Klebstoffpräparate sind besonders vorteilhaft lösungsmittelhaltig - wobei die Lösungsmittel vorzugsweise solche sind, wie oben angegeben.

Die in Betrieben, die nicht für die Verarbeitung von Kunststoffen ausgerüstet sind, anfallenden Verpackungsmaterialien - z.B. in landwirtschaftlichen Betrieben, Bau-, Papierbearbeitungs-, Textilkonfektions-oder -verkaufsunternehmen, usw. - können gesammelt und zur Weiterverarbeitung z.B. an Klebstoffherstellern zur Herstellung von Klebstoff abgegeben werden, was besonders für Betriebe, in denen grosse Mengen an Verpackungsmaterial anfallen - z.B. für landwirtschaftliche Betriebe und Genossenschaften - von Vorteil sein kann.

In den folgenden Beispielen bedeuten die Teile Gewichtsteile und die Prozente Gewichtsprozente; die Temperaturen sind in Celsiusgraden angegeben.

Beispiele 1-10

In einem Rührgefäss mit Rührer unter inerter Atmosphäre (Stickstoff) werden 1000,00 Teile eines Makrodiols vorgelegt und auf 80°C temperiert. Dazu werden x Teile Butandiol-1,4 gegeben und mit dem Makrodiol unter Rühren gemischt.

6

Nach vollständiger Mischung werden y Teile Diisocyanat unter Rühren der Diolmischung zugesetzt. Durch die Exothermie der einsetzenden Polyadditionsreaktion steigt die Temperatur auf ca. 130°C an. Bei steigender Viskosität der Schmelze wird der Rührer aus dem Ansatz entfernt.

Das Reaktionsgemisch wird anschliessend während 4-6 Stunden bei 100-120°C getempert. Danach wird die Polyurethanschmelze auf Raumtemperatur (20°C) abgekühlt. Das kalte Polyurethan wird mittels einer Schneidemühle (mit einem Lochdurchmesser von 8-15mm im Sieb) zerkleinert.

In der folgenden Tabelle sind die in den einzelnen Beispielen eingesetzten Makrodiole und Diisocyanate sowie die Mengen x und y angeführt.

Tabelle

| Bsp. Nr. | Makrodiol | x | Diisocyanat | y |
|---|---|---|---|---|
| 1 | Polyesterdiol auf Basis Butandiol und Adipinsäure Molekulargewicht: 2500 | 0,00 | Toluylendiisocyanat 80/20 (2,4/2,6) | 69,25 |
| 2 | Polyesterdiol auf Basis Butandiol und Adipinsäure Molekulargewicht: 2000 | 15,01 | 4,4'-Diphenylme-thandiisocyanat | 124,73 |
| 3 | Polyesterdiol auf Basis Hexandiol und Adipinsäure Molekulargewicht: 3000 | 15,01 | 4,4'-Diphenylme-thandiisocyanat | 124,73 |
| 4 | Polyesterdiol auf Basis Polycaprolacton Molekulargewicht: 3000 | 9,01 | Toluylendiisocyanat 80/20 (2,4/2,6) | 75,40 |
| 5 | Polyätherdiol auf Basis Polytetramethylen-glykol Molekulargewicht: 2000 | 67,59 | 4,4'-Diphenylme-thandiisocyanat | 310,94 |
| 6 | Polyätherdiol auf Basis Polytetramethylen-glykol Molekulargewicht: 2000 | 112,65 | 4,4'-Diphenylme-thandiisocyanat | 435,31 |
| 7 | Polyesterdiol auf Basis Butandiol und Adipinsäure Molekulargewicht: 1000 | 90,12 | 4,4'-Diphenylme-thandiisocyanat | 373,13 |
| 8 | Polyesterdiol auf Basis Ethylenglykol und Adipinsäure Molekulargewicht: 1000 | 135,18 | 4,4'-Diphenylme-thandiisocyanat | 497,50 |
| 9 | Polyesterdiol auf Basis Polycaprolacton Molekulargewicht: 2000 | 180,24 | 4,4'-Diphenylme-thandiisocyanat | 621,88 |
| 10 | Polyesterdiol auf Basis Polycaprolacton Molekulargewicht: 2000 | 270,36 | 4,4'-Diphenylme-thandiisocyanat | 870,63 |

Herstellung von Polyurethanlösungen und von Folien

Aus den entstandenen Polyurethanschnitzeln der Beispiele 1-4 wird eine 30%ige Lösung in Methyläthylketon hergestellt. Die Viskosität dieser Lösung beträgt 30'000 mPas bei 20°C. Die Polyurethanschnitzel aus den Beispielen 5-8 werden in einem Lösungsmittelgemisch aus 40 Teilen Dimethylformamid und 60 Teilen Methyläthylketon bis zu einer Konzentration von 30% gelöst, die Viskosität der 30%igen Lösungen beträgt ebenfalls 30'000 mPas/20°C. Die Produkte der Beispiele 9 und 10 werden in einer Konzentration von 30% in Dimethylformamid (Beispiel 9) und N-Methylpyrrolidon (Beispiel 10) gelöst.

Die in den Beispielen 1-10 genannten Polyurethane können auch in einem Reaktor in Gegenwart der erwähnten Lösungsmittel hergestellt werden, wobei man in folgender Weise die Reaktion durchführt:

In einem Reaktor mit Rührer und inerter Atmosphäre (Stickstoff) werden 1000,00 Teile des entwässerten Makrodiols vorgelegt. Das Makrodiol wird auf 60°C temperiert. Dazu werden x Teile Butandiol-1,4 gegeben und mit 20% des Lösungsmittels mit dem Makrodiol unter Rühren homogen gemischt. Nach vollständiger Mischung werden y Teile Diisocyanat unter Rühren der gelösten Diolmischung zugesetzt. Durch die Exothermie der einsetzenden Polyadditionsreaktion steigt die Temperatur auf 70°C an. Bei steigender Viskosität der Lösung wird das restliche Lösungsmittel zugesetzt. Die Reaktion ist beendet wenn sich kein Diisocyanat mehr nachweisen lässt.

Die erhaltenen Polyurethan-Lösungen können nach dem Erkalten direkt zur Herstellung von Folien verwendet werden.

Diese Lösungen werden auf Silikonpapier (Papier mit Silikontrennschichtauflage) oder auf polypropylenbeschichtetes Papier in einer Schichtstärke von 0,3mm aufgerakelt. Das Lösungsmittel wird in einem Trockenkanal bei 60-80°C verdampft. Die auf dem Papier verbleibende Polyurethanfolie wird abgekühlt, vom Papier abgezogen und aufgerollt.

Herstellung von Folien aus Polyurethanschmelze

Die Produkte der Beispiele 1-10 werden in einem Extruder mit einem L/D-Verhältnis von 20 D aufgeschmolzen, wobei sich die Aufschmelztemperatur, je nach eingesetztem Polyurethan zwischen 100°C und 220°C bewegt. Die so aufgeschmolzenen Polyurethane werden über eine Breitschlitzdüse von 100μm x 2m extrudiert und sofort gekühlt. Nach einer abgeänderten Verfahrensweise werden die aufgeschmolzenen Polyurethane in einer Blasformdüse zu endlosen Schläuchen ausgeformt.

Packungsbeispiele 1-10

Die 0,1mm starken Polyurethanfolien werden in einer Vertikalschlauchbeutelmaschine zu Säcken verschweisst und mit gleichartigen Polyurethanschnitzeln, die nach dem selben Verfahren wie oben für die jeweilige Folie erwähnt polyaddiert und zerkleinert werden, befüllt und zugeschweisst. Es werden so Packungen zu jeweils 25kg Gesamtgewicht hergestellt, worin Hülle und Inhalt jeweils aus dem gleichen Polyurethan bestehen.

Beim bestimmungsmässigen Auflösen der Polyurethanschnitzel in organischen Lösungsmitteln kann jetzt die gesamte Packung in den Lösebehälter eingebracht werden. Die Eigenschaften der entstandenen Lösung sind trotz der mitgelösten Verpackung unverändert. Abfall entsteht nicht.

Beispiel 11

682,9 Teile eines Polyesters aus Hexandiol und Adipinsäure mit einer Hydroxyzahl von 35 und einer Säurezahl von 1 werden auf 100°C erhitzt und im Vakuum entwässert. Bei 80°C werden 197,1 Teile Isophorondiisocyanat zugegeben. Es wird 2 Stunden bei 90°C gerührt. Der NCO-Gehalt beträgt hiernach 6,35%. Nach Abkühlen auf 60°C wird eine Lösung von 40 Teilen Dimethylolpropionsäure in 90 Teilen N-Methylpyrrolidon hin zugegeben und es wird 2 Stunden bei 90°C gerührt. Der NCO-Gehalt beträgt hiernach 3,07%. Anschliessend werden 27,1 Teile Triäthylamin homogen eingerührt und die erhaltene Masse unter intensivem Rühren in 1272,9 Teile Wasser gegeben.

Man erhält eine feinteilige Dispersion.

Unter intensivem Rühren werden 184,5 Teile einer 40%igen wässrigen Lösung von Aethylendiamin hinzugegeben.

Man erhält eine niederviskose Dispersion mit einem Festkörpergehalt von 40%.

Herstellung der Folie

Die Dispersion wird mit Ammoniak auf pH 8 eingestellt und mit einem Verdickungsmittel ("Collacral VL" der Fa. BASF - ein Verdickungsmittel auf Polyacrylatbasis) auf ein streichfähige Viskosität von 4000 mPas bei 20°C eingestellt und mit einem Rakel auf ein leicht silikonisiertes Transferpapier aufgetragen.

Anstelle von Collacral VL kann hier auch Ammoniak alleine als Verdickungsmittel eingesetzt werden.

Packungsbeispiel 11

Nach Abdunsten des Wassers wird die so erhaltene Folie analog wie in den Packungsbeispielen 1-10 zu einem Sack weiterverarbeitet und mit gleichem Polyurethan befüllt.

Packungsbeispiel 12

Es wird wie im Packungsbeispiel 1 beschrieben verfahren, mit dem Unterschied, dass die Polyurethansäcke nicht mit Polyurethanschnitzeln son dern mit Flammruss befüllt werden. Es werden Packungen zu je 25kg Füllgewicht hergestellt (Sackgewicht = 150g).

Packungsbeispiel 13

Man verfährt wie im Packungsbeispiel 12 beschrieben, mit dem Unterschied, dass die Polyurethansäcke mit pyrogener Kieselsäure (anstelle von Russ) befüllt werden. Es werden Packungen zu je 25kg Füllgewicht hergestellt (Sackgewicht = 300g).

Packungsbeispiel 14

Man verfährt wie im Packungsbeispiel 12 beschrieben, mit dem Unterschied, dass mit Fumarsäure gefüllte Polyurethansäcke zu Packungen von 15kg Füllgewicht hergestellt werden (Sackgewicht = 60g).

Packungsbeispiel 15

Man verfährt wie im Packungsbeispiel 12 beschrieben mit dem Unterscheid, dass die Polyurethansäcke mit Casein (80 Maschen) anstelle von Russ befüllt werden. Es werden Packungen zu je 25kg Füllgewicht hergestellt (Sackgewicht = 225g).

Verwendungsbeispiel A

Herstellung eines Schuhklebstoffes

In einem Fertigungsmischer werden 2410kg Methyläthylketon, 500kg Aceton und 1000kg Toluol vorgelegt. Bei Raumtemperatur ( = 20°C) werden 1 Packung Fumarsäure gemäss Packungsbeispiel 14 und 3 Packungen Kieselsäure gemäss Packungsbeispiel 13 in den Mischer gegeben, worin unter Betätigung des Rührers die Packungen von Rührer aufgerissen werden. Sobald Kieselsäure und Fumarsäure im Lösungsmittelgemisch verteilt sind, werden 40 Packungen Polyurethan gemäss Packungsbeispiel 1 zugegeben und es wird bei 2000 U/min solange gerührt, bis das Polyurethan vollständig gelöst ist. Dann wird ausgeladen und in Weissblechgebinden zu 25kg abgefüllt.

Auf analoge Weise werden anstelle der Polyurethanpackungen gemäss Packungsbeispiel 1 Polyurethanpackungen gemäss Packungsbeispielen 2, 3 oder 4 eingesetzt.

Verwendungsbeispiel B

Herstellung eines schwarz eingefärbten Gummiprofil-Klebstoffes

In einem Fertigungsmischer werden 2950kg Methyläthylketon und 1000kg Toluol vorgelegt. Bei Raumtemperatur werden 4 Packungen Russ gemäss Packungsbeispiel 12 (in Folie gemäss Packungsbeispiel 2 statt 1 verpackt), 30 Packungen Polyurethan gemäss Packungsbeispiel 2 und 8 Packungen Polyurethan gemäss Packungsbeispiel 4 zugegeben und es wird bei 1000 U/min solange gerührt bis das Polyurethan vollständig gelöst ist.

Dann wird ausgeladen und in Weissblechgebinden zu 25kg abgefüllt.

Verwendungsbeispiel C

Herstellung eines Textilkaschierklebstoffes

In einem Fertigungsmischer werden 2000kg Toluol und 2000kg Methyläthylketon vorgelegt und dann werden 40 Packungen Polyurethan gemäss Packungsbeispiel 6 bei Raumtemperatur zugegeben. Bei Betätigung des Rührers werden die Polyurethansäcke von Rührer aufgerissen und das Füllgut verteilt sich rasch im Lösungsmittel. Es wird solange bei 1500 U/min weitergerührt, bis das Polyurethan vollständig gelöst ist. Dann wird ausgeladen und in Rollsickenfässern zu 180kg abgefüllt.

Auf analoge Weise werden anstelle der Polyurethanpackungen gemäss Packungsbeispiel 6 Polyurethanpackungen gemäss Packungsbeispiel 4, 5, 7 oder 11 eingesetzt.

Verwendungsbeispiel D

Herstellung eines Textildeckstrichpräparates

Man verfährt wie im Verwendungsbeispiel C beschrieben, mit dem Unterschied, dass 3000kg Dimethylformamid und 1000kg Toluol und 40 Packungen Polyurethan gemäss Packungsbeispiel 9 eingesetzt werden.

Auf analoge Weise werden anstelle der Polyurethanpackungen gemäss Packungsbeispiel 9 Polyurethanpackungen gemäss Packungsbeispiel 8 oder 10 eingesetzt.

Verwendungsbeispiel E

Teil a) Herstellung von Kaseinkleber

80 Kaseinpackungen gemäss Packungsbeispiel 15 werden geöffnet und der Inhalt wird in einem 10t-Mischer in 8000kg Wasser bei 80°C unter Rühren (1000 U/min) gegeben und es wird solange bei 80°C gerührt bis das Kasein regelmässig im Wasser verteilt ist.

# EP 0 311 571 A1

Teil b) Herstellung von Polyurethankleber

In einem Kessel, in welchem 64kg Methyläthylketon und 16kg Toluol vorgelegt sind, werden unter Rühren (1000 U/min) 0,3kg Fumarsäure und 1,7kg "Aerosil" (Pyrogene Kieselsäure) verteilt; in die erhaltene Masse werden unter ständigem Rühren die 80 entleerten Säcke (18kg) vom obigen Teil a) gegeben und es wird solange weitergerührt, bis eine glatte und vollständig gelöste Masse daraus entstanden ist.

Verwendungsbeispiel F

Man verfährt wie im Verwendungsbeispiel A beschrieben, mit dem Unterschied, dass, anstelle der 40 Packungen Polyurethan gemäss Packungsbeispiel 1, 1000kg gesammelter, gebrauchter, entleerter Polyurethansäcke aus Kiselsäurelieferungen in Packungen gemäss Packungsbeispiel 13 - die durch eine Kennzeichnung am Hüllenmaterial erkennbar sind - in Chargen zu je 25kg nacheinander in den Mischer gegeben werden.

**Patentansprüche**

1. Packmittel aus thermoplastischem Packstoff, dadurch gekennzeichnet, dass der Kunststoff, aus welchem der Packstoff gefertigt ist, ein solcher polyurethanhaltiger Werkstoff ist, dass das Packmittel zur Herstellung von polyurethanhaltigen gebrauchsfertigen Erzeugnissen verwertbar ist.

2. Packmittel gemäss Anspruch 1, worin der Polyurethangehalt des Packstoffes mindestens 50 Gew.% , vorzugsweise mindestens 80 Gew.% beträgt.

3. Verpackung aus Packmittel und gegebenenfalls Packhilfsmittel, worin das Packmittel wie im Anspruch 1 oder 2 definiert ist und allfällige Packhilfsmittel aus dem gleichen oder einem verschiedenen damit kompatiblen Packstoff gefertigt sind.

4. Packmittel gemäss einem der Ansprüche 1-3 in der Form von einem Sack oder Beutel, der gegebenenfalls durch eine eigene Vorrichtung geöffnet werden kann und/oder gegebenenfalls mit einer verschliessbaren Befüllungsöffnung versehen ist.

5. Verwendung des Packmittels und gegebenenfalls Packhilfsmittels gemäss einem der Ansprüche 1-3, dadurch gekennzeichnet, dass man es zu polyurethanhaltigen gebrauchsfertigen Erzeugnissen weiterverarbeitet.

6. Verwendung nach Anspruch 5, dadurch gekennzeichnet, dass man das Packmittel, gegebenenfalls zusammen mit Packhilfsmittel, zu einer verarbeitbaren Masse mindestens teilweise erweicht, schmilzt oder löst und die erhaltene Masse zu gebrauchsfertigen Erzeugnissen verarbeitet.

7. Verfahren zur Herstellung von gebrauchsfertigen polyurethanhaltigen Erzeugnissen, dadurch gekennzeichnet, dass man Packmittel aus thermoplastischem Packstoff, worin der Kunststoff, aus welchem der Packstoff gefertigt ist, ein polyurethanhaltiger Werkstoff ist, gegebenenfalls zusammen mit allfälligen Packhilfsmitteln aus dem gleichen oder einem damit kompatiblen Packstoff dafür einsetzt.

8. Verfahren nach Anspruch 7, dadurch gekennzeichnet, dass die gesamte Verpackung gemäss Anspruch 3 verwertet wird.

9. Verfahren nach Anspruch 7 oder 8, dadurch gekennzeichnet, dass die Packhilfsmittel separat verwertet werden.

10. Packung aus Packgut, Packmittel und gegebenenfalls Packhilfsmittel, dadurch gekennzeichnet, dass das Packmittel ein solches, wie im Anspruch 1 oder 2 definiert, ist.

11. Packung gemäss Anspruch 10, worin das Packgut aus einem mit dem Packmittel kompatiblen Stoff besteht, der gegebenenfalls zusammen mit dem Packmittel zu verarbeiten ist.

12. Packung gemäss Anspruch 10 oder 11 bestehend aus mit Packgut gefülltem Packmittel und gegebenenfalls Packhilfsmittel, worin das Packmittel wie im Anspruch 4 definiert ist.

13. Verwendung der Packung gemäss einem der Ansprüche 10-12, dadurch gekennzeichnet, dass man nach der Entleerung des Packmittels dieses gemäss einem der Ansprüche 5-9 verwertet.

14. Verwendung der Packung gemäss einem der Ansprüche 10-12, dadurch gekennzeichnet, dass man das Packmittel zusammen mit dem Packgut gemäss einem der Ansprüche 5-9 verwertet.

15. Verfahren zur Herstellung von gebrauchsfertigen polyurethanhaltigen Erzeugnissen, dadurch gekennzeichnet, dass man eine Packung gemäss einem der Ansprüche 10-12 dafür einsetzt.

16. Verfahren gemäss Anspruch 15, dadurch gekennzeichnet, dass die Packung in Form von mindestens teilweise erweichte, geschmolzene oder gelöste Masse zu gebrauchsfertigen Erzeugnissen verarbeitet wird.

17. Verfahren nach Anspruch 15 oder 16 zur Herstellung von polyurethanhaltigen Klebstoffen.

18. Die gemäss einem der Ansprüche 5-9 und 13-17 hergestellten gebrauchsfertigen Erzeugnisse.

11

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-4 254 068 (K. OTSUKA)<br>* Spalte 1, Zeile 1 - Spalte 2, Zeile 5 * <br><br>----- | 1,3,5-18 | B 65 D 65/38 |

RECHERCHIERTE SACHGEBIETE (Int. Cl.4)

B 65 D

Der vorliegende Recherchenbericht wurde für alle Patentansprüche erstellt

| Recherchenort | Abschlußdatum der Recherche | Prüfer |
|---|---|---|
| DEN HAAG | 16-12-1988 | CLARKE A.J. |

EPO FORM 1503 03.82 (P0403)